# EUROPÄISCHE PATENTSCHRIFT

(11) **EP 2 507 410 B1**
(45) Veröffentlichungstag und Bekanntmachung des Hinweises auf die Patenterteilung: **01.11.2017**
(21) Anmeldenummer: 09801930.0
(22) Anmeldetag: 01.12.2009
(51) Int. Cl.: C25B 1/04, C25B 15/00, C02F 1/04, B01D 3/34

(54) **VERFAHREN UND VORRICHTUNG ZUM ERZEUGEN VON WASSERSTOFF MITTELS ELEKTROLYSE**
PROCESS AND APPARATUS FOR PRODUCING HYDROGEN BY MEANS OF ELECTROLYSIS
PROCÉDÉ ET DISPOSITIF DE PRODUCTION D'HYDROGÈNE PAR ÉLECTROLYSE

(43) Veröffentlichungstag der Anmeldung: 10.10.2012
(73) Patentinhaber: Neubert, Susanne, 24980 Nordhackstedt (DE)
(72) Erfinder: NEUBERT, Joachim, 71088 Holzgerlingen (DE); STAAB, Karl Ferdinand, 71263 Weil der Stadt (DE)
(74) Vertreter: Liebl, Thomas
(86) Internationale Anmeldenummer: PCT/EP2009/008559
(87) Internationale Veröffentlichungsnummer: WO 2011/066841

(56) Entgegenhaltungen:
- WO-A1-2008/125283
- DE-A1-102007 017 613
- DE-C1- 10 108 528

## Beschreibung

Die Erfindung betrifft ein Verfahren zum Erzeugen von Wasserstoff mittels Elektrolyse nach dem Oberbegriff des Anspruchs 1 sowie eine Vorrichtung zum Erzeugen von Wasserstoff mittels Elektrolyse nach dem Oberbegriff des Anspruchs 7.

Es ist allgemein bekannt, mittels der sogenannten Wasser-Elektrolyse Wasserstoff zu erzeugen. Bei dieser Elektrolyse wird Wasser mit einer Flüssigkeit versetzt, die den Ionentransport ermöglicht. Unter Einsatz von Strom wird Wasser in die Bestandteile Wasserstoff und Sauerstoff zerlegt. Dabei wird die elektrische in die chemische Energie umgewandelt und im Wasserstoff gespeichert.

Konkret kommen verschiedene Verfahren wie die alkalische Elektrolyse, die alkalische Druckelektrolyse, die Protonen-Exchange-Membrane (PEM) -Elektrolyse und die Hochtemperaturelektrolyse sowohl als autotherme als auch als allotherme Elektrolyse, bei Temperaturen von 800 bis 1.000° zum Einsatz. Der Primärenergiebedarf pro m³_{N} Wasserstoff (H₂) dieses Verfahren schwankt zwischen 10,3 kWh für die allotherme Hochtemperatur-Elektrolyse und 12,8 kWh für die alkalische Elektrolyse. Diese Werte berücksichtigen bereits den Bedarf an elektrische Energie für die eigentliche Elektrolyse. Diesem angegebenen elektrischen Energiebedarf kommt noch zusätzlich der Bedarf an elektrische Energie für die Aufbereitung des zu verdampfenden Wassers, zum Beispiel zur Entsalzung mittels Ionenaustausch und Enthärtung. Ebenfalls in diesen Beträgen noch nicht enthalten ist die notwendige thermische Energie für die Verdampfung, deren Betrag von der Endtemperatur abhängig ist. Dadurch kann der Gesamtenergiebedarf auf einen Betrag anwachsen, der durchaus in etwa dem Doppelten der oben angegebenen Primärenergiebedarfswerte entspricht.

Die DE 101 08 528 C1 offenbart ein Verfahren, bei dem die Aufbereitungsflüssigkeit vor der Zumischung von in einem geschlossenen Trägergaskreislauf geführtem Trägergas zur Vorerwärmung und Vorreinigung wenigstens einer Vorerwärmungs/Abscheideeinrichtung zugeführt wird, die jeweils wenigstens einen Vorerwärmungs-Wärmetauscher und eine dem Vorerwärmungs-Wärmetauscher nachgeschaltete Abscheideeinrichtung aufweist. In dieser wird die Aufbereitungsflüssigkeit durch den Vorerwärmungs-Wärmetauscher auf eine Temperatur unterhalb der Siedetemperatur der Basisflüssigkeit vorerwärmt, so dass die bezüglich der Basisflüssigkeit niedersiedenden flüssigen Verunreinigungen verdampfen und/oder die gasförmigen Verunreinigungen thermisch ausgetrieben werden, wobei die verdampften und/oder ausgetriebenen Verunreinigungen in der Abscheideeinrichtung der wenigstens einen Vorerwärmungs/Abscheideeinrichtung abgeschieden werden.

Die WO 2008/125283 A1 offenbart ein Verfahren und eine Vorrichtung zur Aufbereitung von Flüssigkeiten, insbesondere von Meer- und/oder Brackwasser und/oder einer Abfallflüssigkeit und/oder Abwasser, bei dem bzw. bei der ein mit Wasserdampf beladener, heißer Trägergasstrom als heißer Wasserdampf-Trägergasstrom, insbesondere aus einer Vorrichtung zur Aufbereitung von Flüssigkeiten, vorliegt. Konkret wird in Verbindung mit der dortigen Abbildung 4 eine Ausgestaltung offenbart, bei der ein einen Wasserdampf-Elektrolysator verlassender Konzentratstrom einer Pumpenvorlage zugeführt wird.

Demgegenüber ist es Aufgabe der vorliegenden Erfindung, ein Verfahren und eine Vorrichtung zur Verfügung zu stellen, mittels dem bzw. mittels der Wasserstoff mittels der Elektrolyse von Wasser mit einem reduzierten Gesamtenergiebedarf erzeugt werden kann.

Diese Aufgabe wird bezüglich des Verfahrens gelöst mit den Merkmalen des Anspruchs 1. Bezüglich der Vorrichtung wird diese Aufgabe gelöst mit den Merkmalen des Anspruchs 7. Vorteilhafte Ausgestaltungen hierzu sind jeweils der darauf rückbezogenen Unteransprüche.

Gemäß Anspruch 1 wird ein Verfahren zum Erzeugen von Wasserstoff mittels Elektrolyse vorgeschlagen, bei dem erfindungsgemäß aus einer Wasserversorgung, insbesondere aus einer Trinkwasserversorgung, aufbereitetes Wasser und/oder aus einer Salz- oder Brack- oder Süßwasserquelle, insbesondere aus einem Meer und/oder einem Bach und/einem Fluss und/oder einem See, Salz-, Brack- bzw. Süßwasser entnommen, insbesondere mittels einer Saugleitung angesaugt, und als Frischwasser, bevorzugt als mittels einer Vorerwärmungseinrichtung auf eine Temperatur unterhalb der Frischwasser-Verdampfungs- bzw. Siedetemperatur vorerwärmtes Frischwasser, einem Trägergasstrom so zugeführt wird, dass das Frischwasser darin wenigstens zum Teil in lediglich verdunsteter Form, das heißt ohne Verdampfungs- bzw. Siedevorgang, aufgenommen ist und als mit Wasserdampf beladener Trägergasstrom dem wenigstens einen Elektrolysator wenigstens zum Teil zugeführt wird, wobei in dem Elektrolysator dann Wasserstoff sowie gegebenenfalls Sauerstoff vom Trägergas abgespalten wird bzw. werden. Das Trägergas wird in einem Trägergaskreislauf, insbesondere in einem geschlossenen Trägergaskreislauf geführt, so dass das Trägergas nach der Abspaltung des Wasserstoffs sowie gegebenenfalls des Sauerstoffs anschließend wieder mittelbar oder unmittelbar in den Trägergaskreislauf zurückgeführt wird. Unter Brackwasser wird dabei ein Süßwasser-/Salzwassergemisch mit einem definierten Salzgehalt verstanden.

Erfindungsgemäß ist weiter eine Verfahrensführung, bei der das dem Trägergasstrom zugeführte und in diesem wenigstens zum Teil in verdunsteter Form mitgeführte Frischwasser als Trägergas-/Wasserdampfgemisch wenigstens einem Verdichter zugeführt wird, mittels dem es unter Druckerhöhung auf eine solche Temperatur gebracht wird, dass ein heißer Wasserdampf-Trägergasstrom vorliegt.

Mit einer derartigen erfindungsgemäßen Verfahrensführung lässt sich, wie erfinderseitige Versuche überraschend gezeigt haben, der Gesamtprimärenergiebedarf für die Wasserstofferzeugung mittels einer Elektrolyse deutlich reduzieren, zum Beispiel auf einen Gesamtenergiebedarf von ungefähr 7kWh/m³_{N} bei einer alkalischen Elektrolyse, die bei 100 bis 150°C bei einem Betriebsdruck von 3 bis 6 bar, vorzugsweise von in etwa 4 bar, durchgeführt wird. Im Gegensatz zu den herkömmlichen Elektrolyse-Verfahren zur Herstellung von Wasserstoff aus Wasser ergibt sich eine erhebliche Minderung des Energiebedarfs vor allem dadurch, dass die Verdampfungswärme bzw. die Verdampfungsenergie, die notwendig ist, um das Wasser in den für die Elektrolyse erforderlichen gasförmigen Aggregatzustand zu bringen, wesentlich reduziert werden kann. Denn die erfindungsgemäß vorgesehene Verdunstung des für die Elektrolyse in die Dampfform zu überführenden Wassers im Trägergasstrom lässt sich mit einem deutlich reduzierten Energieaufwand durchführen als dies für das Verdampfen des Wassers generell erforderlich ist. Das heißt, dass diese Energieminderung der Verdampfungswärme des Wassers entspricht, die normalerweise als Teil der notwendigen Energie zur Spaltung des Wassers als thermische Energie zugeführt werden muss. Dieser energetische Aufwand zur Erzeugung der thermischen Verdampfungsenergie verursacht somit regelmäßig einen erhöhten Primärenergiebedarf, zum Beispiel von elektrischer Energie, der mit der vorliegenden erfindungsgemäßen Lösung deutlich reduziert werden kann. Dabei ist es weiter von erheblichem Vorteil, wenn das Wasserdampf-/ Trägergasgemisch mittels wenigstens eines Verdichters verdichtet wird, da hier dann die bei der Verdichtung freiwerdende Verdichtungs- bzw. Kompressionswärme ebenfalls dazu ausgenutzt werden kann, einen solchen mit Wasserdampf beladenen Trägergasstrom zur Verfügung zu stellen, der anschließend einem Elektrolysator zugeführt werden kann. Der Verdichter dient dabei gleichzeitig auch als Antrieb des Trägergasstroms, so dass der elektrische Energiebedarf für diesen Antrieb des Trägergasstroms den einzigen zusätzlichen Bedarf an Primärenergie darstellt, der aber gleichzeitig wiederum durch die zuvor geschilderte Zurverfügungstellung von Kompressionswärme dazu beiträgt, den Energieaufwand zur Überführung des Wassers in den dampfförmigen Zustand zu reduzieren.

Weiter erfindungsgemäß ist eine Verfahrensführung, bei dem das Frischwasser zur Vorerwärmung wenigstens einer Vorerwärmungseinrichtung zugeführt wird, in der das Frischwasser in Abhängigkeit vom jeweils vorherrschenden Druck auf eine solche definierte Temperatur unterhalb der Siedetemperatur des Frischwassers vorerwärmt wird, dass ein Teil des, dem Trägergasstrom feinstverteilt zugedüsten oder zugeführten Frischwassers im Wesentlichen sofort bzw. unmittelbar nach der Zuführung verdunstet (spontane Verdunstung) und mit dem heißen und/oder trockenen Trägergasstrom ein nasses Trägergas-/Wasserdampfgemisch ausbildet. Diese nasse Trägergas-/Wasserdampfgemisch wird weiter erfindungsgemäß wenigstens einem Trägergas-/Wasserdampfgemisch-Wärmetauscher zugeführt, mittels dem das nasse Trägergas-/Wasserdampfgemisch so überhitzt wird, dass ein, einen definierten Restwasseranteil enthaltendes, überhitztes Trägergas-/Wasserdampfgemisch erzeugt wird, wobei das einen Restwasseranteil aufweisende, überhitzte Trägergas-/Wasserdampfgemisch anschließend einem Konzentratabscheider zugeführt wird, in dem der Restwasseranteil zusammen mit den darin gelösten Salzen oder dergleichen als Konzentrat abgeschieden wird. Das so gereinigte, den Konzentratabscheider verlassende trockene Trägergas-Trockenwasserdampfgemisch wird anschließend mittels des wenigstens einen Verdichters unter gleichzeitiger Temperaturerhöhung auf einen definierten Betriebsdruck verdichtet. Das mittels des wenigstens einen Verdichters unter gleichzeitiger Temperaturerhöhung auf einen definierten Betriebsdruck verdichtete trockene Trägergas-/Trockenwasserdampfgemisch wird wenigstens zum Teil dem wenigstens einen Trägergas-/Wasserdampfgemisch-Wärmetauscher zugeführt, in dem wenigstens ein Teil des Wasserdampfes unter Wärmeabgabe an das nasse Trägergas-/Wasserdampfgemisch kondensiert, wobei das wenigstens zum Teil kondensierte Trägergas-/Trockenwasserdampfgemisch anschließend einem Kondensatabscheider zugeführt wird, in dem das angefallene Kondensat abgeschieden und ein feuchtes Trägergas erhalten wird, das anschließend dem wenigstens einen Elektrolysator zugeführt wird.

Mit einer derartigen konkreten Verfahrensführung lassen sich die zuvor genannten erfindungsgemäßen Vorteile auf bauteiltechnisch und apparatetechnisch einfache Weise mit hoher Funktionssicherheit erzielen. Das heißt, dass hier eine Art interner Energiekreislauf eingerichtet wird, so dass nur die Vorerwärmung des zu verdunsteten Wassers durch einen zweiten Energiekreislauf sichergestellt werden muss. Sich einstellende Energieverluste werden durch die Kompressionswärme für den Antrieb des Trägergasstroms, wie bereits zuvor erläutert, kompensiert.

Im Hinblick auf das Trägergas ist es sinnvoll, zur Elektrolyse die Membranelektrolyse zu verwenden, obgleich auch die alkalische Elektrolyse sowie die fortgeschrittene alkalische Elektrolyse im Grundsatz anwendbar sind. Sowohl die alkalische Elektrolyse als auch die fortgeschrittene alkalische Elektrolyse bedürfen eines alkalischen Katalysators. Dieser Katalysator kann dabei als Katalysatorbett im Reaktionsraum ausgebildet sein, durch den das feuchte Trägergas hindurch geleitet wird. Aber auch die Vernebelung eines flüssigen Katalysators in den Reaktionsraum hinein ist möglich. Ebenfalls ist eine Kombination von alkalischen Katalysatoren, sowohl als Feststoffilter, als auch als im Reaktionsraum vernebelter Flüssigkatalysator, mit der Membranelektrolyse anwendbar. Im Fall des Flüssigkatalysators im Reaktionsraum sind eine Vernebelungsvorrichtung und eine Beschickungsvorrichtung für den Flüssigkatalysator notwendig. Abhängig von dem angewendeten Flüssigkatalysator ist auch eine Auffang- und Rücklaufeinrichtung für den Flüssigkatalysator erforderlich.

Die Anordnung der Elektrolyse erfolgt grundsätzlich am Abgang des Trägergases von dem Kondensatabscheider, so dass lediglich nur noch Wasserdampf vorhanden ist.

Zusammenfassend lässt sich daher folgendes feststellen:
Bei der herkömmlichen Wasserelektrolyse aus Wasserdampf ist vor der Verdampfung eine Vorbehandlung des Einsatzwassers, in Abhängigkeit von der genutzten Wasserquelle, zum Beispiel mittels einer Enthärtung und Entsalzung sowie einer Entgasung erforderlich. Auch ist bei den notwendigen hohen Temperaturen und Drücken eine Inselanwendung aus Gründen der Sicherheit nicht sinnvoll. Dadurch wird der Aufbau eines Verteilungs- und Versorgungsnetzes mit den notwendigen Verteilerstationen unumgänglich, mit der Folge zusätzlicher Betriebskosten.

Mit der erfindungsgemäßen Lösung dagegen entfällt diese Enthärtung und Entsalzung aufgrund der erfindungsgemäß vorgeschlagenen Verdunstungselektrolyse, weil hier eine Entfernung von Salzen durch eine Nichtverdunstung mit eingeschlossener Abscheidung erfolgen kann. Ein weiterer wesentlicher Vorteil gegenüber dem herkömmlichen Wasserelektrolyseverfahren ist die universelle Einsatzmöglichkeit der vorgeschlagenen Lösung, die insbesondere darin besteht, dass für das benötigte Wasser nur eine unwesentliche Aufbereitung erforderlich ist. Dies bedeutet, dass die Versorgungs- bzw. Saugleitung prinzipiell zum Beispiel in jeden Bach, Fluss oder See oder in ein Meer verlegt werden kann und gegebenenfalls vorab lediglich eine Abscheidung von Grobstoffen, welche zu Verstopfungen führen können, notwendig ist. Dieser Vorteil lässt auch Insellösungen zu, mit einer verbesserten Wirtschaftlichkeit, ohne dass zusätzlich große Aufwendungen wie der Aufbau eines Verteilernetzes, notwendig wären.

Erfindungsgemäß ist weiter vorgesehen, dass das Frischwasser vor dessen Zuführung zum Trägergaskreislauf und vor dessen Vorerwärmung einer zum Beispiel durch einen Speicherbehälter gebildeten Pumpenvorlage zugeführt wird, die wenigstens einer das Frischwasser zum Trägergaskreislauf fördernden Pumpe vorgeschaltet ist und der eine Regeleinrichtung zugeordnet ist, mittels der die Zufuhr von Frischwasser in die Pumpenvorlage und/oder die Entnahme von Frischwasser aus der Pumpenvorlage geregelt wird, und zwar insbesondere füllstandsabhängig geregelt wird. Damit lassen sich funktionssichere Betriebsbedingungen für die Elektrolyse gewährleisten, in dem eine ausreichende Menge an Frischwasser vorgehalten wird.

Das im Kondensatabscheider anfallende Kondensat wird weiter erfindungsgemäß mittelbar der Pumpenvorlage zugeführt, wobei hierbei vorgesehen ist, dass das im Kondensatabscheider anfallende Kondensat vor der Zuführung zu der Pumpenvorlage zum Wärmetausch der Vorerwärmungseinrichtung zugeführt wird, in der das Frischwasser auf eine definierte Temperatur unterhalb der Siedetemperatur des Frischwassers vorerwärmt wird. Damit kann die Kondensatwärme vorteilhaft zur Vorerwärmung des Frischwassers verwendet werden, was den Energiebedarf für diese Vorerwärmung weiter wesentlich reduziert.

In diesem Zusammenhang ist erfindungsgemäß weiter vorgesehen, dass das im Kondensatabscheider anfallende Kondensat vor der Zuführung zur Pumpenvorlage einer Entspannungseinrichtung, insbesondere einem weiteren Kondensatabscheider, zugeführt wird, in der ein gegebenenfalls erforderlicher weiterer Druckabbau erfolgt.

Analog dazu kann das im Konzentratabscheider anfallende Konzentrat einem Konzentrat-Frischwasser-Wärmetauscher zugeführt werden, in dem das Frischwasser stromauf des Trägergaskreislaufs zusätzlich zu einem stromauf oder stromab angeordneten Kondensat-Frischwasser-Wärmetauscher vorerwärmt wird, wobei dem Konzentratabscheider bevorzugt ein Tropfenabscheider mit einer Ablassvorrichtung nachgeschaltet ist, dessen abgeschiedenes Tropfenabscheider-Konzentrat ebenfalls dem Konzentrat-/Frischwasser-Wärmetauscher zugeführt wird, wobei das Tropfenabscheider-Konzentrat bevorzugt mit dem Konzentrat vom Konzentratabscheider zusammengeführt und dem Konzentrat-Frischwasser-Wärmetauscher zugeführt wird.

Wie bereits zuvor geschildert, kann insbesondere zum Abscheiden von großen, gegebenenfalls zu Verstopfungen führenden Verunreinigungen des zum Beispiel aus einer Salz- oder Süßwasserquelle angesaugten Frischwassers wenigstens eine Vorreinigungsstufe vorgesehen sein, die insbesondere durch eine eine Siebvorrichtung und/oder ein Sedimentationsbecken aufweisende mechanische Vorreinigungsstufe gebildet ist. Es versteht sich, dass diese mechanische Vorreinigung selbstverständlich auch der Pumpenvorlage vorgeschaltet sein muss.

Gemäß einer weiteren besonders bevorzugten Verfahrensführung kann vorgesehen sein, dass der der wenigstens einen Pumpe vorgeschalteten Pumpenvorlage neben einer definierten Menge eines Frischwassers ferner, in Abhängigkeit von definierten Elektrolyse- und/oder Aufbereitungsparametern, eine definierte Menge eines abzuscheidende Verunreinigungen aufweisenden Abwassers zugeführt wird, so dass dem Trägergaskreislauf ein definiertes Frischwasser-/Abwasser-Gemisch zugeführt wird. In diesem Fall können dann in der Vorerwärmungseinrichtung die bezüglich des Wassers niedersiedenden flüssigen Verunreinigungen verdampfen und/oder werden die gasförmigen Verunreinigungen thermisch ausgetrieben sowie anschließend die so verdampft und/oder ausgetriebenen Verunreinigungen abgeschieden. Beim Erzeugen eines, einen Restwasseranteil enthaltenden, überhitzten Trägergas-/ Wasserdampfgemisches werden zudem diejenigen flüssigen Verunreinigungen, die eine Siedetemperatur über der Siedetemperatur von Wasser aufweisen, zusammen mit dem Restwasseranteil und den darin gelösten Salzen in dem Konzentratabscheider als Konzentrat abgeschieden. Neben der erfindungsgemäßen Erzeugung von Wasserstoff aus Frischwasser kann hier somit gleichzeitig auch in einem bestimmten Rahmen eine Aufbereitung von Abfallflüssigkeiten vorgenommen werden. Grundsätzlich kann die erfindungsgemäße Vorrichtung daher auch zur Aufbereitung von Abwässern bzw. Abwasserflüssigkeiten Verwendung finden.

Des Weiteren ist gemäß einer bevorzugten Ausgestaltung vorgesehen, dass der wenigstens eine im Trägergaskreislauf angeordnete Verdichter mit einer Kühlvorrichtung mit wenigstens einem Ölkühler gekoppelt ist, mittels dem das Schmieröl des Verdichters gekühlt und gleichzeitig das dem Trägergaskreislauf zuzuführende Frischwasser erwärmt wird. Damit kann zum einen eine Überhitzung des Schmieröls im Verdichter bzw. Booster vermieden werden und gleichzeitig die dabei freiwerdende Wärmeenergie zur Vorerwärmung des Frischwassers genutzt werden. Dadurch lässt sich der Wirkungsgrad der Anlage nochmals erhöhen.

Des Weiteren ist es sinnvoll, die Energiebedarfsdeckung mittels einer unabhängigen Eigenstromerzeugung sicherzustellen. Diese Eigenstromerzeugung kann zum Beispiel als Kombination von Windkraft mit einer Photovoltaikanlage erfolgen, was zu einer Minimierung des CO₂-Anfalls führt. Im Hinblick auf die Abgasfreiheit und Effizienz ist eine Energieerzeugung mittels Windenergie in Kombination mit einer photoelektrischen Energiegewinnung und einer Turbine, mit der die latente Druckenergie aus dem abfließenden Kondensat genutzt werden kann, besonders sinnvoll. Erfindungsgemäß ist vorgesehen, dass die Energie zum Betreiben von Stromverbrauchern der Anlage wenigstens zum Teil mittels einer, einen Generator antreibenden Turbine zur Verfügung gestellt wird, die in die vom Kondensatabscheider kommende Kondensatablaufleitung geschaltet ist. Durch diese somit ausdrücklich auch alleine zur Energieversorgung einsetzbare, das heißt nicht mit einer Windkraft- und Photovoltaikanlage gekoppelte Turbine können etwa 10 bis 12,5% des Energiebedarfs der Wasserdampfelektrolyse gedeckt werden, verbunden mit einem Abbau des im System herrschenden Druckes bis auf den Normaldruck. Durch diese erfindungsgemäßen Einrichtungen wird der Einsatz des Verfahrens sowohl in ariden, als auch in semiariden Zonen der Erde möglich. Die Entscheidung welcher Weg der Energieerzeugung bevorzugt ist, ist dabei selbstverständlich wesentlich von den örtlich vorherrschenden meteorologischen und infrastrukturellen Bedingungen abhängig. Diese örtlichen Bedingungen legen die jeweiligen Anteile an der Energieerzeugung fest.

Von herausgehobener Bedeutung ist ferner die Gewinnung von elektrischer Energie aus dem anfallenden Wasserstoff und Sauerstoff mittels Brennstoffzellen. Das erzeugte Wasserstoff- und Sauerstoffgas kann in entsprechenden Speicheranlagen gesammelt werden und in der Nacht über Brennstoffzellen zur Stromversorgung genutzt werden. Bei ausreichenden und konstanten Windbedingungen kann das nicht genutzte Wasserstoffgas auch nutzbringend verkauft werden. Durch die Trocknung des Trägergases vergrößert sich darüberhinaus die Aufnahmekapazität des Trägergases für Wasserdampf in einem Trägergaskreislauf bemerkbar und führt ebenfalls zu einer Steigerung des erzeugten Kondensats und des Wasserstoffgases.

Grundsätzlich kann zur Deckung des Energiebedarfs aber auch Energie aus einer Biogasanlage und/oder einem Biomasseheizkraftwerk eingesetzt werden.

Die vorstehende Aufgabe bezüglich der Vorrichtung wird gelöst mit den Merkmalen des Anspruchs 7.

Mit einem derartigen erfindungsgemäßen Aufbau einer Vorrichtung lassen sich die zuvor in Verbindung mit der Verfahrensführung genannten Vorteile auf bauteil- und fertigungstechnisch einfache Art und Weise mit hoher Funktionssicherheit erzielen.

Als Einmischvorrichtung in den Elektrolysator wird bevorzugt eine Luftstrahl-Wasserpumpe und/oder ein statischer Mischer verwendet.

Die weiteren Vorteile einer erfindungsgemäßen Vorrichtung wurden ebenso, wie der prinzipielle Aufbau der Vorrichtung in bevorzugten Ausführungsformen bereits zuvor in Verbindung mit der Verfahrensführung ausführlich gewürdigt, so dass diesbezüglich auf die zuvor gemachten Ausführungen verwiesen wird.

Die Erfindung wird nachfolgend anhand einer Zeichnung näher erläutert.

Es zeigen:
- Fig. 1: schematisch ein Fließbild einer ersten erfindungsgemäßen Ausführungsform,
- Fig. 2: schematisch ein Fließbild einer zweiten erfindungsgemäßen Ausführungsform, und
- Fig. 3: schematisch ein Fließbild einer dritten erfindungsgemäßen Ausführungsform.

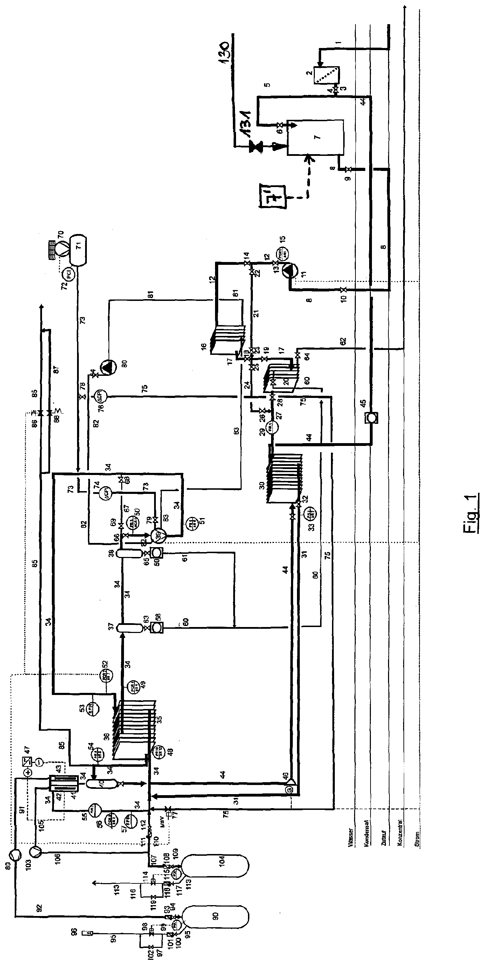

In der Fig. 1 wird das zur Wasserstofferzeugung erforderliche Frischwasser über eine Saugleitung 1 in eine zum Beispiel mechanische Vorreinigungsstufe 2 eingeleitet und über Leitungen 3, 5 durch entsprechende Steuerung der Ventile 4, 6 einer Pumpenvorlage 7 zugeführt. Dieser Pumpenvorlage 7 wird ebenfalls, was nachfolgend noch näher beschrieben wird, über eine Kondensatablaufleitung 44, die in die Leitung 5 einmündet, ein, in einem Kondensat-/Frischwasser-Wärmetauscher 30 gekühltes Kondensat zugeführt. Dieser Pumpenvorlage 7 ist eine hier lediglich äußerst schematisch und beispielhaft dargestellte Regeleinrichtung 7' zugeordnet, über die, zum Beispiel füllstandabhängig, die Zufuhr von Frischwasser in die Pumpenvorlage 7 bzw. gegebenenfalls auch die Entnahme von Frischwasser aus der Pumpenvorlage 7 geregelt wird.

Eine Pumpe 11 fördert das Frischwasser aus der Pumpenvorlage 7 über eine Saugleitung 8 mit den Ventilen 9, 10 sowie eine Druckleitung 12 mit den Ventilen 13, 14 sowie der Druck- und Temperaturmesseinrichtung 15 in einen Ölkühler 16, sowie weiter über eine Leitung 17 mit den Ventilen 18, 19 zu einem Konzentrat-Frischwasser-Wärmetauscher (Konzentratkühler) 20 und weiter mittels einer Leitung 27 mit Ventil 28 und mit einer Durchflussmengenmessvorrichtung 29 zunächst zu dem Kondensat-/Frischwasser-Wärmetauscher 30. Das nunmehr zum Beispiel bis in einem definierten Maße unter die Verdampfungstemperatur des Wassers auf zum Beispiel 50 bis 95°C vorgewärmte Wasser wird über eine Druckleitung 31 mit einem Ventil 32 und einer Temperatur- und Druckmessvorrichtung 33 zu einer Trägergasringleitung 34 geführt und somit in einem Trägergaskreislauf eingeführt. Der Druck beträgt hier in etwa 3 bis 6 bar, bevorzugt in etwa 4 bar.

Für den Fall des Ausfallens des Ölkühlers 16 ist eine Bypassleitung 21 mit Ventilen 22, 23 zwischen den Druckleitungen 12, 17 vorgesehen. Ebenfalls ist eine Umgehungsleitung 24 für den Konzentrat-/Frischwasser-Wärmetauscher 20 zwischen den Druckleitungen 17 und 27 mit den zugehörigen Ventilen 25 und 26 vorgesehen.

Im Wärmetauscher 30 wird die Temperatur des Frischwassers, abhängig vom vorhandenen Druck, bis möglichst nahe an die Verdampfungstemperatur vorerwärmt, wodurch die Temperatur des Kondensates aus einem Kondensatabscheider 40, abhängig von den Erfordernissen einer nachfolgenden Benutzung, zum Beispiel auf eine Minimaltemperatur abgekühlt wird. Damit wird auch die mögliche Endtemperatur des den Wärmetauscher 30, über die Druckleitung 31, verlassen Frischwassers bestimmt.

Das auf die gewünschte, optimale Temperatur erwärmte Frischwasser wird in die Trägergasringleitung 34 zugeführt und zum Beispiel mittels einer entsprechenden Vorrichtung in dem Trägergasstrom feinstverteilt zugedüst bzw. eingeleitet, so dass eine nahezu spontane Verdunstung erfolgen kann. Das nunmehr vorliegende nasse Trägergas-/Wasserdampfgemisch gelangt über die Trägergasringleitung 34 mit der Druck- und Temperaturmessstelle 48 in den als Verdunster wirkenden Trägergas-/ Wasserdampfgemisch-Wärmetauscher 35, in dem eine weitere Erwärmung mit dem Ziel der Zurverfügungstellung eines überhitzten Trägergas-/Wasserdampfgemisches erfolgt, und zwar dergestalt, dass dieses überhitzte Trägergas-/Wasserdampfgemisch nach wie vor einen definierten Restwasseranteil aufweist.

Das überhitzte Trägergas-/Wasserdampfgemisch wird mit dem Restwasseranteil mittels der Trägergasringleitung 34 in einen Konzentratabscheider 37 eingeleitet, in dem das Restwasser als Konzentrat abgeschieden wird. Dabei kann dieser Konzentratabscheider sowohl als Zyklon als auch als Prallplattenabscheider ausgebildet sein. Im Falle des Prallplattenabscheiders sind sowohl Einplatten- als Mehrplattenabscheider einsetzbar.

Das nunmehr keine Restflüssigkeit bzw. kein Restwasser enthaltende Trägergas-/ Wasserdampfgemisch verlässt über die Trägergasringleitung 34 den Konzentratabscheider 37, um mittels des Verdichters bzw. Kompressors 39, unter Temperaturerhöhung, auf einen für ein Trägergas-/Trockenwasserdampfgemisch optimierten Betriebsdruck eingestellt zu werden. Dieses Trägergas-/Trockenwasserdampfgemisch gelangt über die Trägergasringleitung zu einer Kondensationsseite 36 des Trägergas-/Wasserdampfgemisch-Wärmetauschers 35, um dort unter Kondensation wenigstens eines Teil des Wasserdampfes abgekühlt zu werden. Das entstandene Kondensat wird anschließend dem Kondensatabscheider 40 zugeführt und dort abgeschieden, wobei vom Prinzip her die gleichen Abscheiderarten wie beim Konzentratabscheider 37 Verwendung finden können.

Zur Betriebsüberwachung sind in der Trägergasringleitung 34 eine Durchflussmengenmessvorrichtung 55, die Temperaturmessvorrichtungen bzw. Betriebsdruckmessvorrichtungen 48, 49, 50, 51, 52, 54 und 56 sowie die Messstellen für die relative Luftfeuchte 53 und 57 angeordnet. Diese Messvorrichtungen sind entsprechend miteinander verknüpft und dienen als Regel- und Steuergrößen sowie zur Ermittlung von Massengrößen.

Das im Kondensatabscheider 40 anfallende Kondensat wird über die Kondensatablaufleitung 44 in den Wärmetauscher 30 und weiter unter Abbau des vorhandenen Betriebsdruckes mittels eines Kondensatabscheiders 45 in die Pumpenvorlage 7 eingeleitet, wie dies bereits zuvor beschrieben worden ist.

Das nach dem Trägergas-/Wasserdampfgemisch-Wärmetauscher 35 im Trägerkreislauf anfallende Konzentrat wird in dem Konzentratabscheider 37 mittels einer Ablassvorrichtung 58 über eine Leitung 60 dem Konzentrat-/Frischwasser-Wärmetauscher 20 zur Vorerwärmung des zulaufenden Frischwassers zugeführt, bevor es über eine Leitung 62 die Anlage verlässt. Der Konzentratstrom kann über die Ventile 63 und 64 geregelt werden.

Zur Erhöhung der Betriebssicherheit ist dem Konzentratabscheider 37 ein Tropfenabscheider 38 mit einer Ablassvorrichtung 59 nachgeschaltet, welcher ebenfalls über die Leitungen 61 und 60 mit dem Konzentrat-/Frischwasser-Wärmetauscher 20 verbunden ist. Der Ablass kann hier über ein Ventil 65 geregelt werden.

Das vom Kondensat befreite, noch feuchte Trägergas wird über die Trägergasringleitung 34 zu einem Elektrolysator 41 mit einer Anode 42 und einer Kathode 43 und einem dazugehörigen Gleichrichter 47 zugeführt. Im Elektrolysator 41 erfolgt die Einmischung mittels einer nicht dargestellten Einmischvorrichtung, die zum Beispiel als Luftstrahl-Wasserpumpe oder aber auch als statischer Mischer ausgebildet sein kann. Als Trägergas können alle, im Wasser nicht oder nur schwer löslichen Gas zur Anwendung kommen, zum Beispiel Inertgase.

Ein Verlust von Trägergas wird durch ein in einem Trägergasspeicherbehälter 71 vorgehaltenes Trägergas ausgeglichen. Dieser Ausgleich erfolgt, unter Nutzung eines Kompressors 70 über die Gasleitungen 73 und 75, in der bzw. in denen ein Absperrventil 78 und die Regelventile 76 (Druckregelung) und 77 (zum Beispiel ein über den Systemdruck gesteuertes Magnetventil) angeordnet sind, in die Trägergasringleitung 34. Der Trägergasspeicherbehälter 71 ist durch eine Ablassvorrichtung, bestehend aus einer Druckmessvorrichtung 72, einem Ablassrohr mit Ablassventil, welche Bestandteile des Trägergasspeicherbehälters 71 sind, gesichert. Gleichzeitig erfolgt bevorzugt über die Druckleitung 73 mit dem Regelventil 74 das Aufbringen eines Sperrgases zur sicheren Trennung des Kompressionsraums des Verdichters 39 von den ölgefüllten Räumen des Verdichters 39. Das Ventil 79 dient als Absperrventil zum Verdichter 39 hin.

Um eine Überhitzung des Schmieröls im Verdichter 39 zu verhindern, ist eine Kühlvorrichtung bestehend aus einer Umwälzpumpe 80, dem Ölkühler 16, vorgesehen, welche über Ölleitungen 82, 83 und 81 verbunden sind, so dass eine kontinuierliche Schmierung gewährleistet ist.

Der den Kondensatabscheider 40 verlassende Trockendampf (vom Kondensat befreites, trockenes Wasserdampf-/Trägergasgemisch) wird in dem Elektrolysator 41 mit der Kathode 43 und der Anode 41 in Wasserstoff und Sauerstoff zerlegt, wodurch eine Trocknung des Trägergases erfolgt. Das anfallende Wasserstoffgas wird mittels der Absauge- und Verdichtungseinrichtung 89 über Leitungen 91, 92 einem Druckbehälter 90 zugeführt und dort gespeichert. In der Druckleitung 92 sind ein Rückschlagventil 93 und ein Absperrventil 94 angeordnet. An dem Druckbehälter 90 sind mindestens eine Abblaseinrichtung bestehend aus einer Abblasleitung 95 mit einer Fackel 96 angeordnet. In dieser Abblasleitung 95 ist ferner ein Magnetventil 98, welches über eine Druckmessvorrichtung 99 geöffnet und geschlossen wird, angeordnet. Weiter ist sowohl eine Bypassleitung 97 mit Ventil 102 als auch ein Rückschlagventil 101 sowie ein Absperrventil 100 in der Abblasleitung 95 angeordnet.

Das anfallende Sauerstoffgas wird mittels der Absaug- und Verdichtungsvorrichtung 103 über die Leitungen 105, 106 und 107, dem Rückschlagventil 108 und dem Absperrventil 109, einem Sammelbehälter 104 zugeführt. Es ist aber ebenso möglich, den Sauerstoff über Druckleitungen 106 und 110, mit dem Rückschlagventil 111 und dem Ventil 112 wieder direkt in den Trägergaskreislauf einzuleiten, falls dies dort benötigt werden sollte. An dem Druckbehälter 104 ist mindestens eine Abblaseinrichtung, bestehend aus der Abblasleitung 113 angeordnet. In dieser Abblasleitung 113 ist ein Magnetventil 114, welches über eine Druckmessvorrichtung 115 geöffnet und geschlossen wird, angeordnet. Weiter ist in der Abblaseinrichtung 113 auch eine Bypassleitung 116 mit einem Ventil 119, als auch ein Rückschlagventil 117 und ein Absperrventil 118 zugehörig. Wie dies der Fig. 1 weiter entnommen werden kann, wird das vom Wasserstoff- bzw. Sauerstoff befreite Trägergas wieder über die Trägergasringleitung 34 zurück zur Einspeisestelle des Frischwassers geführt.

Im Bereich des Verdichters 39 ist ferner stromauf des Verdichters 39 eine Bypassleitung 67 mit Ventilen 68, 69 abgezweigt, wodurch, wenn der Verdichter 39 zum Beispiel außer Betrieb genommen werden soll, der Kreislauf geschlossen werden kann.

In der Fig. 1 ist ferner noch eine Abwasser-Zuführleitung 130 zur Pumpenvorlage 7 mitsamt Ventil 131 dargestellt, was die grundsätzliche Möglichkeit der Beschickung der Pumpenvorlage 7 mittels eines abzuscheidende Verunreinigungen aufweisenden Abwassers aufzeigen soll. Dieses wird ebenfalls in die Pumpenvorlage 7 zugeführt und durchläuft dann anschließend den eben geschilderten Aufbau, wobei die darin gelösten, gegenüber dem Frischwasser zusätzlichen Verunreinigungen dann gegebenenfalls nach dem Wärmetauscher 30 (niedersiedende bzw. gasförmige Verunreinigungen zu ausgeschieden werden, während die höhersiedenden, insbesondere flüssigen Verunreinigungen dann im Trägergaskreislauf im Konzentratabscheider 37 als Konzentrat abgeschieden werden.

In der Fig. 1 ist ferner noch eine Sicherheitsleitung 85 zum Ableiten eines eventuell entstehenden Überdrucks gezeigt. Der Druckabbau erfolgt hier insbesondere und bevorzugt über ein elektrisches Magnetventil 86 bzw., falls dieses defekt sein sollte oder ausfallen sollte oder aber auch zusätzlich über eine Bypassleitung 87, in der ein mechanisches Ventil 88 angeordnet ist.

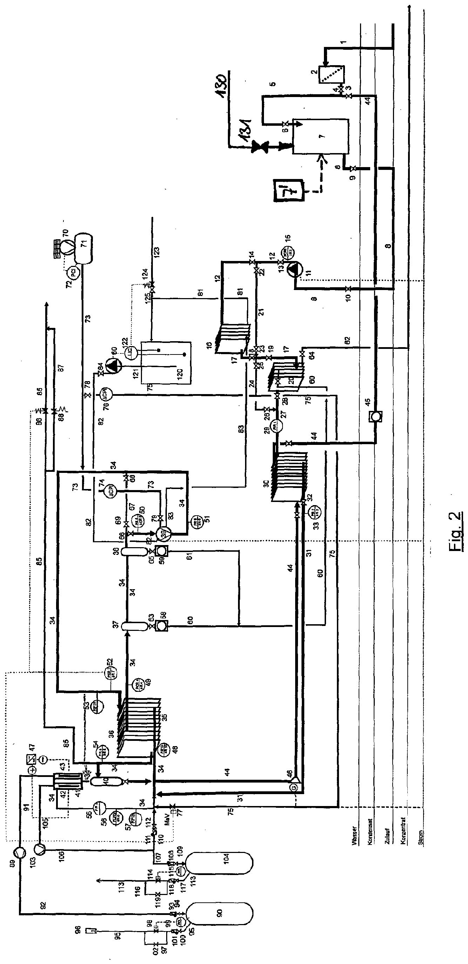

Die Fig. 2 zeigt einen grundsätzlich ähnlichen Aufbau zum Fließbild der Fig. 1. Nachstehend werden lediglich die Unterschiede betrachtet.

Im Unterschied zur Fig. 1 ist in der Fig. 2 für den Fall, dass die Ölkühlung für den Verdichter 39 nicht direkt erfolgen kann oder soll, ein externer Kühlkreislauf vorgesehen. Dieser Kühlkreislauf besteht aus einer Kühlwasservorlage 120, einer Kühlwasserpumpe 80 und einem Wärmetauscher 16, welche über die Leitungen 82, 83, 84 und 121 verbunden sind. In der Kühlwasservorlage 120 ist eine Füllstandsmessung 122 angeordnet, welche eine Frischwasserzufuhr mit einer Leitung 123 mit Magnetventil 124 regelt.

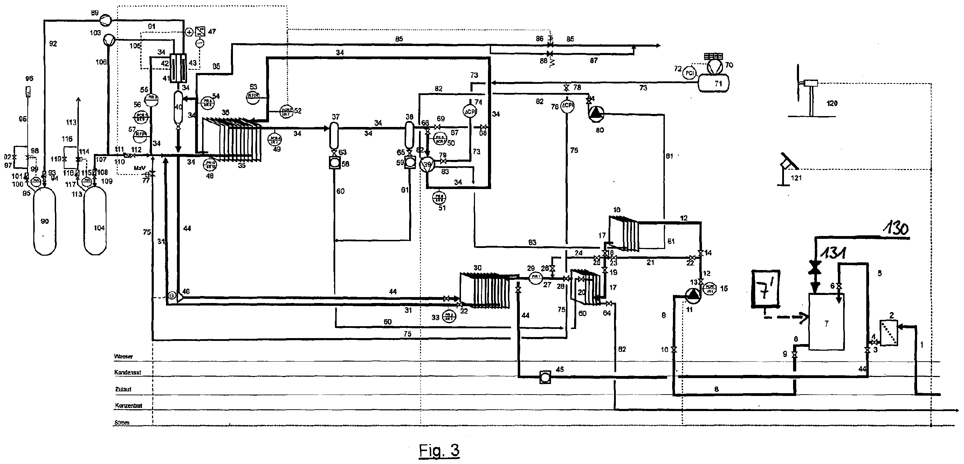

In Fig. 3 ist ein grundsätzlich der Fig. 1 ähnlicher Aufbau gezeigt, allerdings mit einer eigenständigen Energieversorgung. So ist insbesondere in ariden oder semiariden Gebieten, oder in Gebieten mit nicht vorhandener oder nur schwach ausgebildeter Infrastruktur bevorzugt eine eigenständige Energieversorgung vorzusehen. Diese Energieversorgung kann als Windenergie 120 und/oder als Solarenergie 121 und/oder als Energie aus einer Turbine 46, die in die Kondensatablaufleitung 44 integriert ist, bestehen. In besonderen Fällen ist auch die Energiegewinnung aus Brennstoffzellen, die nicht extra dargestellt sind, aus dem vorhandenen Wasserstoff möglich.

## Patentansprüche

1. Verfahren zum Erzeugen von Wasserstoff mittels Elektrolyse, bei dem wenigstens einem Elektrolysator Wasser zugeführt und anschließend im Elektrolysator Wasserstoff mittels Elektrolyse erzeugt wird, wobei aus einer Wasserversorgung aufbereitetes Wasser und/oder aus einer Salz- oder Brack- oder Süßwasserquelle Salz-, Brack- bzw. Süßwasser entnommen und als Frischwasser einem Trägergasstrom so zugeführt wird, dass das Frischwasser darin wenigstens zum Teil in verdunsteter Form aufgenommen ist und als mit Wasserdampf beladener Trägergasstrom dem wenigstens einen Elektrolysator (41) zugeführt wird, in dem Wasserstoff oder Wasserstoff und Sauerstoff vom Trägergas abgespalten wird, wobei das Trägergas in einem Trägergaskreislauf geführt wird und nach der Abspaltung des Wasserstoffes oder des Wasserstoffs und Sauerstoffs anschließend wieder mittelbar oder unmittelbar in den Trägergaskreislauf zurückgeführt wird,
das dem Trägergasstrom zugeführte und in diesem wenigstens zum Teil in verdunsteter Form mitgeführte Frischwasser als Trägergas-/Wasserdampfgemisch wenigstens einem Verdichter (39) zugeführt wird, mittels dem es auf eine solche Temperatur gebracht wird, dass ein heißer Wasserdampf-Trägergasstrom vorliegt,
das Frischwasser zur Vorerwärmung wenigstens einer Vorerwärmungseinrichtung (16, 20, 30) zugeführt wird, in der das Frischwasser in Abhängigkeit vom jeweils vorherrschenden Druck auf eine solche definierte Temperatur unterhalb der Verdampfungs- bzw. Siedetemperatur des Frischwassers vorerwärmt wird, dass ein Teil des dem Trägergasstrom feinstverteilt zugedüsten oder zugeführten Frischwassers im Wesentlichen sofort oder unmittelbar nach der Zuführung verdunstet und mit dem trockenen Trägergasstrom ein nasses Trägergas-/Wasserdampfgemisch ausbildet,
das nasse Trägergas-/Wasserdampfgemisch wenigstens einem Trägergas-/Wasserdampfgemisch-Wärmetauscher (35) zugeführt wird, mittels dem das nasse Trägergas-/Wasserdampfgemisch so überhitzt wird, dass ein, einen definierten Restwasseranteil enthaltendes, überhitztes Trägergas-/Wasserdampfgemisch erzeugt wird,
das einen Restwasseranteil aufweisende, überhitzte Trägergas-/Wasserdampfgemisch einem Konzentratabscheider (37) zugeführt wird, in dem der Restwasseranteil zusammen mit den darin gelösten Salzen als Konzentrat abgeschieden wird,
das den Konzentratabscheider (37) verlassende trockene Trägergas-/ Trockenwasserdampfgemisch mittels des wenigstens einen Verdichters (39) unter gleichzeitiger Temperaturerhöhung auf einen definierten Druck verdichtet und dem wenigstens einen Trägergas-Wasserdampfgemisch-Wärmetauscher (35) zugeführt wird, in dem wenigstens ein Teil des Wasserdampfes kondensiert, wobei das wenigstens zum Teil kondensierte Trägergas-/Trockenwasserdampfgemisch anschließend einem Kondensatabscheider (40) zugeführt wird, in dem das angefallene Kondensat abgeschieden und ein feuchtes Trägergas erhalten wird, das dem wenigstens einen Elektrolysator zugeführt wird,
das Frischwasser vor dessen Zuführung zum Trägergaskreislauf und vor dessen Vorerwärmung einer Pumpenvorlage (7) zugeführt wird, die wenigstens einer das Frischwasser zum Trägergaskreislauf fördernden Pumpe (11) vorgeschaltet ist und der eine Regeleinrichtung zugeordnet ist, mittels der die Zufuhr von Frischwasser in die Pumpenvorlage (7) und/oder die Entnahme von Frischwasser aus der Pumpenvorlage (7) geregelt wird, **dadurch gekennzeichnet, dass** das im Kondensatabscheider (40) anfallende Kondensat dergestalt mittelbar der Pumpenvorlage (7) zugeführt wird, dass das im Kondensatabscheider (40) anfallende Kondensat vor der Zuführung zur Pumpenvorlage (7) zum Wärmetausch der Vorerwärmungseinrichtung (30) zugeführt wird, in der das Frischwasser auf eine definierte Temperatur unterhalb der Siedetemperatur des Frischwassers vorerwärmt wird,
dass das im Kondensatabscheider (40) anfallende Kondensat vor der Zuführung zur Pumpenvorlage (7) und nach der Vorerwärmungseinrichtung (30) einer Entspannungseinrichtung (45) zugeführt wird, in der ein Druckabbau erfolgt, und
dass die Energie zum Betreiben von Stromverbrauchern der Anlage wenigstens zum Teil mittels einer, einen Generator antreibenden Turbine (46) zur Verfügung gestellt wird, die in die vom Kondensatabscheider (40) kommende Kondensatablaufleitung (44) geschaltet ist.

2. Verfahren nach Anspruch 1, **dadurch gekennzeichnet, dass** das im Konzentratabscheider (37) anfallende Konzentrat einem Konzentrat-/Frischwasser-Wärmetauscher (20) zugeführt wird, in dem das Frischwasser stromauf des Trägergaskreislaufes zusätzlich zu einem stromauf oder stromab angeordneten Kondensat-/Frischwasser-Wärmetauscher (30) vorerwärmt wird, wobei dem Konzentratabscheider (37) bevorzugt ein Tropfenabscheider (38) mit einer Ablassvorrichtung (59) nachgeschaltet ist, dessen abgeschiedenes Tropfenabscheider-Konzentrat ebenfalls dem Konzentrat-/Frischwasser-Wärmetauscher (20) zugeführt wird, wobei das Tropfenabscheider-Konzentrat bevorzugt mit dem Konzentrat vom Konzentratabscheider (37) zusammengeführt und dem Konzentrat-Frischwasser-Wärmetauscher (20) zugeführt wird.

3. Verfahren nach Anspruch 1 oder 2, **dadurch gekennzeichnet, dass** das mittels einer Saugleitung aus einer Salz- oder Süßwasserquelle angesaugte Frischwasser vor der Zuführung zu der der Pumpe (11) vorgelagerten Pumpenvorlage (7) wenigstens einer Vorreinigungsstufe (2), insbesondere einer eine Siebvorrichtung und/oder ein Sedimentationsbecken aufweisenden mechanischen Vorreinigungsstufe, zugeführt wird, in der grobe, feststoffartige Verunreinigungen abgetrennt werden.

4. Verfahren nach einem der Ansprüche 1 bis 3, **dadurch gekennzeichnet, dass** der der wenigstens einen Pumpe (11) vorgeschalteten Pumpenvorlage (7) neben einer definierten Menge eines Frischwassers ferner in Abhängigkeit von definierten Elektrolyse- und/oder Aufbereitungsparametern eine definierte Menge eines abzuscheidende Verunreinigungen aufweisenden Abwassers zugeführt wird, so dass dem Trägergaskreislauf ein definiertes Frischwasser-Abwasser-Gemisch zugeführt wird, wobei dann in der wenigstens einen Vorerwärmungseinrichtung (16, 20, 30) die bezüglich des Wassers niedersiedenden flüssigen Verunreinigungen verdampfen und/oder die gasförmigen Verunreinigungen thermisch ausgetrieben sowie anschließend die so verdampften und/oder ausgetriebenen Verunreinigungen abgeschieden werden, und
wobei beim Erzeugen eines, einen Restwasseranteil enthaltenden, überhitzten Trägergas-/Wasserdampfgemisches zudem diejenigen flüssigen Verunreinigungen, die eine Siedetemperatur über der Siedetemperatur von Wasser aufweisen, zusammen mit dem Restwasseranteil und den darin gelösten Salzen in dem Konzentratabscheider (37) als Konzentrat abgeschieden werden.

5. Verfahren nach einem der Ansprüche 1 bis 4, **dadurch gekennzeichnet,**
**dass** der wenigstens eine im Trägergaskreislauf angeordnete Verdichter (39) mit einer Kühlvorrichtung mit wenigstens einem Ölkühler (16) gekoppelt ist, mittels dem das Schmieröl des Verdichters (39) gekühlt und gleichzeitig das dem Trägergaskreislauf zuzuführende Frischwasser erwärmt wird.

6. Verfahren nach einem der Ansprüche 1 bis 5, **dadurch gekennzeichnet,**
**dass** die Energie zum Betreiben von Stromverbrauchern der Anlage, insbesondere des wenigstens einen Elektrolysators (41), insbesondere eines Gleichrichters (47) des Elektrolysators, und/oder einer dem Trägergaskreislauf vorgeschalteten Pumpe (11) und/oder wenigstens eines Verdichters (39), zusätzlich wenigstens zum Teil mittels einer Windkraftanlage (120) und/oder einer Photovoltaikanlage (121) und/oder einer Biogasanlage und/oder einem Biomasseheizkraftwerk und/oder einer Brennstoffzelle, insbesondere einer mit dem gewonnenen Wasserstoff und/oder Sauerstoff beschickten Brennstoffzelle, zur Verfügung gestellt wird.

7. Vorrichtung zur Erzeugung von Wasserstoff mittels Elektrolyse mittels eines Verfahrens nach einem der vorhergehenden Ansprüche,
mit einem Elektrolysator,
wobei die Vorrichtung wenigstens eine mit einer Wasserversorgung, und/oder eine mit einer Salz- oder Brack- oder Süßwasserquelle gekoppelte Versorgungsleitung aufweist, mittels der einem Trägergasstrom eines Trägergaskreislaufes unter vorheriger Vorerwärmung in einer Vorerwärmungseinrichtung (16, 20, 30) Frischwasser zuführbar ist,
wobei der Trägergaskreislauf eine Trägergasringleitung (34) aufweist, in die wenigstens ein Verdichter (39) integriert ist, der ein trockenes Trägergas-Trockenwasserdampfgemisch unter Temperaturerhöhung auf einen definierten Druck verdichtet, wobei das den wenigstens einen Verdichter (39) verlassende, komprimierte und erhitzte Trägergas-Trockendampfgemisch einem Kondensatabscheider (40), dem der wenigstens eine Elektrolysator (41) nachgeschaltet ist, zuführbar ist,
wobei wenigstens eine mit der wenigstens einen Versorgungsleitung gekoppelte Pumpenvorlage (7) vorgesehen ist, die wenigstens einer das Frischwasser zum Trägergaskreislauf fördernden Pumpe (11) vorgeschaltet ist und in der das Frischwasser vor dessen Zuführung zum Trägergaskreislauf aufgenommen ist, wobei der Pumpenvorlage (7) eine Regeleinrichtung zugeordnet ist, mittels der die Entnahme von Frischwasser aus der Pumpenvorlage (7) und/oder die Zuführung von Frischwasser in die Pumpenvorlage (7) regelbar ist,
wobei von der Pumpenvorlage (7) wenigstens eine die wenigstens eine Pumpe (11) aufweisende Druckleitung (31) zur Trägergasringleitung (34) geführt und mit dieser strömungsverbunden ist, wobei wenigstens eine Vorerwärmungseinrichtung (16, 20, 30) vorgesehen ist, der das Frischwasser von der Zuführung zum Trägergaskreislauf zuführbar ist, wobei im Trägergaskreislauf wenigstens ein Trägergas-/Wasserdampfgemisch-Wärmetauscher (35) angeordnet ist, dem ein Konzentratabscheider (37) nachgeschaltet ist, wobei der wenigstens eine Verdichter (39) dem Konzentratabscheider (37) nachgeschaltet ist, wobei der Verdichter (39) mit einer Kondensatorseite (36) des Trägergas-Wasserdampfgemisch-Wärmetauschers (35) strömungsverbunden ist, wobei der Kondensatorseite (36) des Trägergas-/Wasserdampfgemisch-Wärmetauschers (35) ein Kondensatabscheider (40) nachgeschaltet ist, **dadurch gekennzeichnet dass** der Kondensatabscheider (40) eine Kondensatablaufleitung (44) aufweist, in die eine Turbine (46) integriert ist, die unter Druckabbau im Kondensat einen Generator zur Stromerzeugung antreibt, dessen elektrische Energie einem Stromverbraucher der Vorrichtung, insbesondere dem wenigstens einen Elektrolysator (41) und/oder der wenigstens einen Pumpe (11) und/oder dem wenigstens einen Verdichter (39), zuführbar ist,
dass das im Kondensatabscheider (40) anfallende Kondensat mittels der Kondensatablaufleitung (44) über die Vorerwärmungseinrichtung (30) zu der der Pumpe (11) vorgeschalteten Pumpenvorlage (7) geführt ist, und
dass das im Kondensatabscheider (40) anfallende Kondensat vor der Zuführung zur Pumpenvorlage (7) und nach der Vorerwärmungseinrichtung (30) einer Entspannungseinrichtung (45) zugeführt ist, in der ein Druckabbau erfolgt.

8. Vorrichtung nach Anspruch 7, **dadurch gekennzeichnet, dass** der Pumpenvorlage (7) ferner eine Zuführleitung für abzuscheidende Verunreinigungen aufweisendes Abwasser zugeordnet ist und/oder dass das Frischwasser und/oder das Abwasser, insbesondere stromauf der Pumpenvorlage (7) wenigstens einer Vorreinigungsstufe (2), insbesondere einer eine Siebvorrichtung und/oder ein Sedimentationsbecken aufweisenden mechanischen Vorreinigungsstufe zuführbar ist.

## Claims

1. Method to generate hydrogen by means of electrolysis, wherein water is fed to at least one electrolyzer, and then hydrogen is generated in the electrolyzer by means of electrolysis,
wherein
prepared water is taken from a water supply, and/or salt water, or brackish water, or sweet water is taken from a saltwater, or brackish water, or sweetwater source and fed as fresh water to a carrier gas stream such that the fresh water is taken up at least partially in an evaporated form therein and is fed as a carrier gas stream charged with steam to the at least one electrolyzer (41) in which hydrogen, or hydrogen and oxygen, are removed from the carrier gas, wherein the carrier gas is guided in a carrier gas circuit, and after the hydrogen, or hydrogen and oxygen, are removed, said carrier gas is then returned indirectly or directly to the carrier gas circuit,
the fresh water supplied to the carrier gas stream and entrained therein at least partially in an evaporated form is supplied as a carrier gas/steam mixture to at least one compressor (39) by means of which it is brought to a temperature such that there is a hot steam/carrier gas stream,
the fresh water is supplied for preheating to at least one preheating device (16, 20, 30) in which the fresh water is preheated to a specific temperature below the evaporation or boiling temperature of fresh water depending on the predominating pressure such that part of the fresh water sprayed very finely into or supplied to the carrier gas stream evaporates substantially immediately or directly after being supplied and forms a wet carrier gas/steam mixture with the dry carrier gas stream,
the wet carrier gas/steam mixture is supplied to at least one carrier gas/steam mixture heat exchanger (35) by means of which the wet carrier gas/steam mixture is superheated such that a superheated carrier gas/steam mixture is generated that contains a specific residual water component,
the superheated carrier gas/steam mixture having a residual water component is supplied to a concentrate separator (37) in which the residual water component is separated together with the salts dissolved therein as a concentrate,
the dry carrier gas/dry steam mixture leaving the concentrate separator (37) is compressed to a specific pressure by means of the least one compressor (39) while simultaneously undergoing an increase in temperature, and supplied to the at least one carrier gas/steam mixture heat exchanger (35) in which at least part of the steam condenses, wherein the at least partially condensed carrier gas/dry steam mixture is then supplied to a condensate separator (40) in which the arising condensate is separated, and a moist carrier gas is obtained that is supplied to the at least one electrolyzer,
before being supplied to the carrier gas circuit and before being preheated, the fresh water is supplied to a pump receiver (7) that is upstream from at least one pump (11) conveying the fresh water to the carrier gas circuit, and that is assigned a control device by means of which the supply of fresh water into the pump receiver (7) and/or the removal of fresh water from the pump receiver (7) is regulated,
**characterized in that**
the condensate arising in the condensate separator (40) is supplied indirectly to the pump receiver (7) such that the condensate arising in the condensate separator (40), before being supplied to the pump receiver (7), is supplied for exchanging heat to the preheating device (30) in which the fresh water is preheated to a specific temperature below the boiling temperature of fresh water,
before being supplied to the pump receiver (7) and after the preheating device (30), the condensate arising in the condensate separator (40) is supplied to a relaxation device (45) in which pressure is decreased, and
the energy for operating power consumers of the system is at least partially provided by means of a turbine (46) that drives a generator and is in the condensate drain line (44) coming from the condensate separator (40).

2. Method according to Claim 1, **characterized in that** the concentrate arising in the concentrate separator (37) is supplied to a concentrate/freshwater heat exchanger (20) in which the fresh water upstream from the carrier gas circuit is additionally preheated to a condensate/freshwater heat exchanger (30) arranged upstream or downstream, wherein a droplet separator (38) with a drain apparatus (59) is preferably downstream from the concentrate separator (37), and its separated droplet separator concentrate is also supplied to the concentrate/freshwater heat exchanger (20), wherein the droplet separator concentrate is preferably combined with the concentrate from the concentrate separator (37) and is supplied to the concentrate/freshwater heat exchanger (20).

3. Method according to Claim 1 or 2, **characterized in that** before being supplied to the pump receiver (7) upstream from the pump (11), the fresh water drawn by means of a suction line from a salt or sweetwater source is supplied to at least one precleaning step (2), in particular a mechanical precleaning step having a sieve apparatus and/or a sedimentation basin in which coarse or solid-like impurities are separated.

4. Method according to one of Claims 1 to 3, **characterized in that** moreover depending on specific electrolysis and/or preparation parameters, the pump receiver (7) upstream from the at least one pump (11) is supplied a specific amount of wastewater having impurities which are to be removed, in addition to a specific amount of fresh water so that a specific fresh water/wastewater mixture is supplied to the carrier gas circuit, wherein the liquid impurities that are low-boiling in comparison to water are then evaporated in the at least one preheating device (16, 20, 30), and/or the gaseous impurities are thermally expelled, and then the impurities evaporated and/or expelled in this manner are separated, and
wherein when a superheated carrier gas/steam mixture containing a residual water component is generated, the liquid impurities that have a boiling temperature above the boiling temperature of water are also separated as a concentrate in the concentrate separator (37) together with the residual water component and the salts dissolved therein.

5. Method according to one of Claims 1 to 4, **characterized in that** the at least one compressor (39) arranged in the carrier gas circuit is coupled to a cooling device with at least one oil cooler (16) by means of which the lubricating oil of the compressor (39) is cooled, and the fresh water to be supplied to the carrier gas circuit is simultaneously heated.

6. Method according to one of Claims 1 to 5, **characterized in that** the energy for operating power consumers of the system, especially the at least one electrolyzer (41), especially a rectifier (47) of the electrolyzer, and/or a pump (11) upstream from the carrier gas circuit, and/or at least one compressor (39) is moreover at least partially provided by a wind turbine (120) and/or a photovoltaic system (121), and/or a biogas system, and/or a biomass heating plant, and/or a fuel cell, especially a fuel cell which is fed the obtained hydrogen and/or oxygen.

7. Device for generating hydrogen by means of electrolysis by means of a method according to one of the preceding claims,
having an electrolyzer,
wherein the device has at least one supply line coupled to a water supply, and/or a supply line coupled to a saltwater, or brackish water, or sweetwater source, by means of which a carrier gas stream of a carrier gas circuit can be supplied with fresh water after being heated beforehand in a preheating device (16, 20, 30), wherein the carrier gas circuit has a carrier gas ring line (34) in which at least one compressor (39) is integrated that compresses a dry carrier gas/dry steam mixture to a specific pressure with an increase in temperature, wherein the compressed and heated carrier gas/dry steam mixture leaving the at least one compressor (39) can be fed to a condensate separator (40) which is downstream from the least one electrolyzer (41),
wherein at least one pump receiver (7) coupled to the at least one supply line is provided that is upstream from the at least one pump (11) conveying the fresh water to the carrier gas circuit, and which holds the fresh water before it is supplied to the carrier gas circuit, wherein the pump receiver (7) is assigned a regulating device by means of which the removal of fresh water from the pump receiver (7) and/or the supply of fresh water to the pump receiver (7) can be regulated,
wherein at least one pressure line (31) having the least one pump (11) runs from the pump receiver (7) to the carrier gas ring line (34) and is fluidically connected thereto,
wherein at least one preheating device (16, 20, 30) is provided that can supply the fresh water from the supply to the carrier gas circuit
wherein at least one carrier gas/steam mixture heat exchanger (35) which is upstream from a concentrate separator (37) is arranged in the carrier gas circuit,
wherein the at least one compressor (39) is downstream from the concentrate separator (37),
wherein the compressor (39) is fluidically connected to a condenser side (36) of the carrier gas/steam mixture heat exchanger (35),
wherein the condenser side (36) of the carrier gas/steam heat exchanger (35) is downstream from a condensate separator (40),
**characterized in that**
the condensate separator (40) has a condensate drain line (44) in which a turbine (46) is integrated that drives a generator for generating power while decreasing the pressure in the condensate, and its electrical energy can be fed to a power consumer of the device, in particular to the at least one electrolyzer (41), and/or the least one pump (11), and/or the least one compressor (39),
the condensate arising in the condensate separator (40) is fed by means of the condensate drain line (44) via the preheating device (30) to the pump receiver (7) upstream from the pump (11), and
before being supplied to the pump receiver (7) and after the preheating device (30), the condensate arising in the condensate separator (40) is supplied to a relaxation device (45) in which pressure is decreased.

8. Device according to Claim 7, **characterized in that** the pump receiver (7) is moreover assigned a supply line for wastewater having impurities to be removed, and/or the fresh water, and/or the wastewater can be supplied to at least one precleaning step (2), in particular a mechanical precleaning step having a sieve device and/or a sedimentation basin, especially upstream from the pump receiver (7).

## Revendications

1. Procédé de production d'hydrogène par électrolyse selon lequel de l'eau est introduite dans au moins un électrolyseur, puis de l'hydrogène est produit dans l'électrolyseur par électrolyse, selon lequel
de l'eau traitée est prélevée à partir d'une alimentation d'eau et/ou de l'eau saline, saumâtre ou douce à partir d'une source d'eau saline ou saumâtre ou douce, et introduite en tant qu'eau fraîche dans un courant de gaz vecteur de sorte que l'eau fraîche y soit au moins partiellement absorbée sous forme vaporisée et introduite sous la forme d'un courant de gaz vecteur chargé avec de la vapeur d'eau dans ledit au moins un électrolyseur (41), dans lequel de l'hydrogène ou de l'hydrogène et de l'oxygène sont clivés du gaz vecteur, le gaz vecteur étant mis en circulation dans un circuit de gaz vecteur, puis réintroduit directement ou indirectement dans le circuit de gaz vecteur après le clivage de l'hydrogène ou de l'hydrogène et de l'oxygène,
l'eau fraîche introduite dans le courant de gaz vecteur et au moins partiellement entraînée dans celui-ci sous forme vaporisée est introduite sous la forme d'un mélange de gaz vecteur/vapeur d'eau dans au moins un compresseur (39), au moyen duquel elle est portée à une température telle qu'un courant de vapeur d'eau-gaz vecteur chaud soit présent,
l'eau fraîche est introduite pour le préchauffage dans au moins un dispositif de préchauffage (16, 20, 30), dans lequel l'eau fraîche est préchauffée en fonction de la pression qui règne à chaque fois à une température définie inférieure à la température de vaporisation ou d'ébullition de l'eau fraîche telle qu'une partie de l'eau fraîche injectée ou introduite sous forme finement divisée dans le courant de gaz vecteur soit essentiellement vaporisée immédiatement ou directement après l'introduction et forme avec le courant de gaz vecteur sec un mélange de gaz vecteur/vapeur d'eau humide,
le mélange de gaz vecteur/vapeur d'eau humide est introduit dans au moins un échangeur de chaleur pour le mélange de gaz vecteur/vapeur d'eau (35), au moyen duquel le mélange de gaz vecteur/vapeur d'eau humide est surchauffé de sorte qu'un mélange de gaz vecteur/vapeur d'eau surchauffé contenant une fraction d'eau résiduelle défini soit produit,
le mélange de gaz vecteur/vapeur d'eau surchauffé contenant une fraction d'eau résiduelle est introduit dans un séparateur de concentré (37), dans lequel la fraction d'eau résiduelle est séparée conjointement avec les sels dissous dans celle-ci sous la forme d'un concentré,
le mélange de mélange de gaz vecteur/vapeur d'eau sèche séché quittant le séparateur de concentré (37) est comprimé au moyen dudit au moins un compresseur (39) à une pression définie avec élévation simultanée de la température, et introduit dans ledit au moins un échangeur de chaleur pour le mélange de gaz vecteur/vapeur d'eau (35), dans lequel au moins une partie de la vapeur d'eau est condensée, le mélange de gaz vecteur/vapeur d'eau sèche au moins partiellement condensé étant ensuite introduit dans un séparateur de condensat (40), dans lequel le condensat formé est séparé et un gaz vecteur humide est obtenu, qui est introduit dans ledit au moins un électrolyseur,
l'eau fraîche est introduite avant son introduction dans le circuit de gaz vecteur et avant son préchauffage dans un collecteur de pompe (7), qui est raccordé en amont d'au moins une pompe (11) transportant l'eau fraîche dans le circuit de gaz vecteur et auquel un dispositif de régulation est attribué, au moyen duquel l'introduction d'eau fraîche dans le collecteur de pompe (7) et/ou le soutirage d'eau fraîche du collecteur de pompe (7) sont régulés,
**caractérisé**
**en ce que** le condensat formé dans le séparateur de condensat (40) est introduit indirectement dans le collecteur de pompe (7) de sorte que le condensat formé dans le séparateur de condensat (40) soit introduit avant l'introduction dans le collecteur de pompe (7) pour l'échange de chaleur dans le dispositif de préchauffage (30), dans lequel l'eau fraîche est préchauffée à une température définie inférieure à la température d'ébullition de l'eau fraîche,
**en ce que** le condensat formé dans le séparateur de condensat (40) est introduit avant l'introduction dans le collecteur de pompe (7) et après le dispositif de préchauffage (30) dans un dispositif de détente (45), dans lequel une réduction de pression a lieu, et
**en ce que** l'énergie pour l'exploitation de consommateurs de courant de l'unité est mise à disposition au moins en partie au moyen d'une turbine (46) actionnant un générateur, qui est raccordée dans la conduite de sortie de condensat (44) provenant du séparateur de condensat (40).

2. Procédé selon la revendication 1, **caractérisé en ce que** le concentré formé dans le séparateur de concentré (37) est introduit dans un échangeur de chaleur concentré/eau fraîche (20), dans lequel l'eau fraîche est préchauffée en amont du circuit de gaz vecteur en plus d'un échangeur de chaleur condensat/eau fraîche (30) agencé en amont ou en aval, un séparateur de gouttes (38) muni d'un dispositif de déchargement (59) étant de préférence raccordé en aval du séparateur de concentré (37), dont le concentré issu du séparateur de gouttes séparé est également introduit dans l'échangeur de chaleur concentré/eau fraîche (20), le concentré issu du séparateur de gouttes étant de préférence rassemblé avec le concentré issu du séparateur de concentré (37) et introduit dans l'échangeur de chaleur concentré-eau fraîche (20).

3. Procédé selon la revendication 1 ou 2, **caractérisé en ce que** l'eau fraîche aspirée au moyen d'une conduite d'aspiration à partir d'une source d'eau saline ou douce est introduite avant l'introduction dans le collecteur de pompe (7) en amont de la pompe (11) dans au moins une étape de pré-purification (2), notamment dans une étape de pré-purification mécanique comprenant un dispositif de tamisage et/ou un bassin de sédimentation, dans laquelle des impuretés grossières de type solide sont séparées.

4. Procédé selon l'une quelconque des revendications 1 à 3, **caractérisé en ce qu'**une quantité définie d'une eau résiduaire comprenant des impuretés à séparer est introduite dans le collecteur de pompe (7) raccordé en amont de ladite au moins une pompe (11) en plus d'une quantité définie d'une eau fraîche en fonction de paramètres d'électrolyse et/ou de traitement définis, de sorte qu'un mélange eau fraîche-eau résiduaire défini soit introduit dans le circuit de gaz vecteur, les impuretés liquides d'un point d'ébullition inférieur à celui de l'eau se vaporisant alors et/ou les impuretés gazeuses étant extraites thermiquement dans ledit au moins un dispositif de préchauffage (16, 20, 30), puis les impuretés ainsi vaporisées et/ou extraites étant séparées, et
lors de la production d'un mélange de gaz vecteur/vapeur d'eau surchauffé contenant une fraction d'eau résiduelle, les impuretés liquides qui présentent une température d'ébullition supérieure à la température d'ébullition de l'eau étant séparées conjointement avec la fraction d'eau résiduelle et les sels dissous dans celle-ci dans le séparateur de concentré (37) sous la forme d'un concentré.

5. Procédé selon l'une quelconque des revendications 1 à 4, **caractérisé en ce que** ledit au moins un compresseur (39) agencé dans le circuit de gaz vecteur est couplé avec un dispositif de refroidissement muni d'au moins un refroidisseur d'huile (16), au moyen duquel l'huile lubrifiante du compresseur (39) est refroidie et l'eau fraîche à introduire dans le circuit de gaz vecteur est simultanément chauffée.

6. Procédé selon l'une quelconque des revendications 1 à 5, **caractérisé en ce que** l'énergie pour l'exploitation de consommateurs de courant de l'unité, notamment dudit au moins un électrolyseur (41), notamment d'un redresseur (47) de l'électrolyseur, et/ou d'une pompe (11) raccordée en amont du circuit de gaz vecteur et/ou d'au moins un compresseur (39), est en outre mise à disposition au moins en partie au moyen d'une centrale éolienne (120) et/ou d'une centrale photovoltaïque (121) et/ou d'une usine de production de biogaz et/ou d'une centrale thermique à biomasse et/ou d'une pile à combustible, notamment d'une pile à combustible alimentée avec l'hydrogène et/ou l'oxygène produits.

7. Dispositif de production d'hydrogène par électrolyse au moyen d'un procédé selon l'une quelconque des revendications précédentes,
comprenant un électrolyseur,
le dispositif comprenant au moins une conduite d'alimentation couplée avec une alimentation d'eau et/ou avec une source d'eau saline ou saumâtre ou douce, au moyen de laquelle de l'eau fraîche peut être introduite dans un courant de gaz vecteur d'un circuit de gaz vecteur avec préchauffage préalable dans un dispositif de préchauffage (16, 20, 30),
le circuit de gaz vecteur comprenant une conduite circulaire de gaz vecteur (34), dans laquelle au moins un compresseur (39) est intégré, qui comprime un mélange de gaz vecteur-vapeur d'eau sèche séché à une pression définie avec élévation de la température, le mélange de gaz vecteur-vapeur sèche comprimé et chauffé quittant ledit au moins un compresseur (39) pouvant être introduit dans un séparateur de condensat (40), qui est raccordé en aval dudit au moins un électrolyseur (41),
au moins un collecteur de pompe (7) couplé avec ladite au moins une conduite d'alimentation étant prévu, qui est raccordé en amont d'au moins une pompe (11) transportant l'eau fraîche vers le circuit de gaz vecteur, et dans lequel l'eau fraîche est reçue avant son introduction dans le circuit de gaz vecteur, un dispositif de régulation étant attribué au collecteur de pompe (7), au moyen duquel le soutirage d'eau fraîche à partir du collecteur de pompe (7) et/ou l'introduction d'eau fraîche dans le collecteur de pompe (7) peuvent être régulés,
au moins une conduite sous pression (31) comprenant ladite au moins une pompe (11) conduisant depuis le collecteur de pompe (7) jusqu'à la conduite circulaire de gaz vecteur (34) et étant raccordée fluidiquement avec celle-ci,
au moins un dispositif de préchauffage (16, 20, 30) étant prévu, dans lequel l'eau fraîche peut être introduite avant l'introduction dans le circuit de gaz vecteur,
au moins un échangeur de chaleur pour le mélange de gaz vecteur/vapeur d'eau (35) étant agencé dans le circuit de gaz vecteur, en aval duquel un séparateur de concentré (37) est raccordé,
ledit au moins un compresseur (39) étant raccordé en aval du séparateur de concentré (37),
le compresseur (39) étant raccordé fluidiquement avec un côté condensateur (36) de l'échangeur de chaleur pour le mélange de gaz vecteur/vapeur d'eau (35),
un séparateur de condensat (40) étant raccordé en aval du côté condensateur (36) de l'échangeur de chaleur pour le mélange de gaz vecteur/vapeur d'eau (35), **caractérisé**
**en ce que** le séparateur de condensat (40) comprend une conduite de sortie de condensat (44), dans laquelle une turbine (46) est intégrée, qui actionne avec diminution de pression dans le condensat un générateur pour la production de courant, dont l'énergie électrique peut être introduite dans un consommateur de courant du dispositif, notamment ledit au moins un électrolyseur (41) et/ou ladite au moins une pompe (11) et/ou ledit au moins un compresseur (39),
**en ce que** le condensat formé dans le séparateur de condensat (40) est introduit au moyen de la conduite de sortie de condensat (44) par le biais du dispositif de préchauffage (30) dans le collecteur de pompe (7) raccordée en amont de la pompe (11), et
**en ce que** le condensat formé dans le séparateur de condensat (40) est introduit avant l'introduction dans le collecteur de pompe (7) et après le dispositif de préchauffage (30) dans un dispositif de détente (45), dans lequel une diminution de pression a lieu.

8. Dispositif selon la revendication 7, **caractérisé en ce qu'**une conduite d'alimentation pour une eau résiduaire comprenant des impuretés à séparer est en outre attribuée au collecteur de pompe (7) et/ou **en ce que** l'eau fraîche et/ou l'eau résiduaire peuvent être introduites, notamment en amont du collecteur de pompe (7), dans au moins une étape de pré-purification (2), notamment une étape de pré-purification mécanique comprenant un dispositif de tamisage et/ou un bassin de sédimentation.
